# EUROPEAN PATENT APPLICATION

(11) **EP 1 990 621 A1**
(43) Date of publication of application: **12.11.2008**
(21) Application number: 07107889.3
(22) Date of filing: 10.05.2007
(51) Int. Cl.: G01L 1/22

(54) **A method for preparing a conductive strain sensor on the surface of a device**

(71) Applicant: Nederlandse Organisatie voor toegepast- natuurwetenschappelijk onderzoek TNO, 2628 VK Delft (NL)
(72) Inventor: Turk, Raymond, 5627 MV, Eindhoven (NL); Enting, Hendrik, 5685 JV, Best (NL); Tacken, Roland Anthony, 5663 SH, Geldrop (NL); Rendering, Hendrik, 3437 XH, Nieuwegein (NL); Houben, René Jos, 6031 HW, Nederweert (NL)
(74) Representative: van Loon, C.J.J.

(57) **Abstract**

The invention provides a method for preparing a conductive strain sensor on the surface of a device to measure strain at the surface of the device, which method comprises the steps of:
(a) providing a device;
(b) applying an isolating layer on a surface of the device;
(c) establishing a distribution of particles of a first metal on the isolating layer obtained in step (b); and
(d) depositing a layer of a second metal on at least part of the distribution of the particles of the first metal as obtained in step (c).

## Description

The present invention relates to a method for preparing a conductive strain sensor on the surface of a device to measure strain at the surface of the device, and a device obtainable by said method.

Conductive strain sensors are used to monitor the strain at the surface of parts of devices or devices as such in their intended environment. The use of such sensors is based on the measurement of an inherent electrical property which is a function of an induced strain. In this way, the performance of mechanical parts can be understood under particular conditions.

It is known that conductive strain sensors can be made of a metal foil which has been deposited onto a flexible polymer foil. On the foil so obtained a pattern of a resistant is subsequently applied and part of the metal foil will be removed by etching, resulting in a sensor foil which can then be applied on the device of which the strain needs to be monitored.

Object of the present invention is to provide a more simple process for preparing conductive strain sensors on the surface of a device.

Surprisingly, it has now been found that this can be established when use is made of a particular sequence of process steps whereby the strain sensor is directly prepared on the surface of the device of the strain at the surface needs to be measured.

Accordingly, the present invention relates to a method for preparing a conductive strain sensor on the surface of a device to measure strain at the surface of the device, which method comprises the steps of:
(a) providing a device;
(b) applying an isolating layer on a surface of the device;
(c) establishing a distribution of particles of a first metal on the isolating layer obtained in step (b); and
(d) depositing a layer of a second metal on at least part of the distribution of the particles of the first metal as obtained in step (c).

Preferably, the first metal to be used in accordance with the present invention is selected from the group consisting of cobalt, nickel, copper, rhodium, palladium, platinum, silver and gold.

More preferably, the first metal is palladium.

In accordance with the present invention, the second metal is selected from the group consisting of copper, nickel, tin, silver, gold. Also any alloy of these metals can suitably be used. A particularly suitable alloy is, for instance, Cu-Ni.

Suitably, also the second metal to be deposited can be derived from metal-containing compound such as, for instance, nickel-phosphorous and nickel-boron.

Preferably, in the method according to the present invention, in step (c) the distribution of particles of the first metal is established by means of a micro-contact process, spraying process, gravure printing process, flexo-printing process, stamping process, pad printing process or inkjet printing method, using a solution that comprises the particles or ions of the first metal. Suitable examples of such metal particles or ions containing solutions include, but are not limited to commercial solutions like Noviganth AK (Atotech) or MID Select 9040 (Enthone-OMI). Preferably, such a solution is an acidic solution of Pd in colloidal or ionic form, stabilised by Sn ions. An attractive solution comprises 20 - 100 mg/l of Pd ; 2 - 5 g/l Sn and 2.5 - 3.5 M Cl. The skilled person will understand that the composition can be adjusted to make the parameters in question more suitable for the deposition process to be used.

More preferably, in step (c) the distribution of particles of the first metal is established by means of a stamp using a solution that comprises the particles of the first metal.

The stamping process can be carried out as follows. First, a solution of particles is deposited on the stamp, which can be done by placing the stamp on a sponge wetted by the material to be deposited. This wetted stamp can then be pressed against the substrate. Depending on the pressure applied and the time the stamp is pressed against the substrate a clear transfer can be generated. Before repeating the process for a second transfer the stamp may need to be cleaned.

The particles of the first metal have suitably an average particle size in the range of from 1 nm - 10 micron preferably in the range of from 1 nm - 50 nm. These ranges apply to the particles distributed on the isolating layer as well as the particles contained in the solution to be used.

In accordance with the present invention, in step (d) the layer of the second metal can suitably be deposited on the distribution of the particles of the first metal by means of an electroless plating process or electro-deposion process. Preferably, the layer of the second metal is deposited in step (d) on the distribution of the particles of the first metal by means of an electroless plating process.

In an electroless plating process use is made of the principle that a metal which is available in ionic form in solution can be reduced by a reducing agent into its metallic form on a suitable catalytic surface. Moreover, the metal itself should also be catalytic to the reduction reaction, rendering the process autocatalytic as such For general descriptions on electroless plating processes reference can, for instance, be made to Electroless Plating Fundamentals & Applications, edited by Glenn O. Mallory and Juan B. Hajdu, New York (1990*).* In the electroless plating process suitably use is made of a solution containing the second metal to be deposited on the distribution of the first metal. Suitable metal-containing solutions include, but are not limited to, commercial solutions such asEnplate EN 435E (Enthone) or Enplate MID Select 9070 (Enthone). The latter solution typically comprises 1 - 6 g/l Cu ; 20 - 100 g/l of a complexing agent ; and 5 - 30 ml/l formaldehyde (reductor). Such solutions typically have a pH value between 11 - 14.. The former solution typically comprises4 - 8 g/l Ni; 30 - 60 g/l of a complexing agent; 10 - 30 g/l hypophosphite (reductor). Such solutions typically have a pH value ranging between 4 - 6. In the electroless plating process to be used in accordance with the present invention preferably use is made of a copper and/or nickel containing solution.

Preferably, the layer of the second metal covers the distribution of the first metal on the isolating layer completely.

In a particular attractive embodiment of the present invention, after step (d) an electro-deposition process with the second metal is applied to establish that the second metal covers completely the distribution of the first metal on the isolating layer.

The isolating layer to be used in the present invention suitably comprises a material selected from the group consisting of poly(styrene), poly(butadiene), poly(propylene), poly(ethylene), poly(carbonate), poly(etherether ketone), poly(vinylchloride), poly(vinylidene chloride), poly(vinylidene fluoride), poly(tetrafluoroethylene), poly(acrylate), poly(phenylene sulfide), poly(sulfone), poly(ethersulfone), poly(ethyleneterephthalate), poly(ethylenenaphthalate), poly(butylterephthalate), poly(caprolactone), poly(ester), poly(vinyl alcohol), poly(vinyl ether), poly(siloxane), poly(acrylonitrile), poly(caprolactam), poly(amide), parylene, poly(naphthalene), poly(imides), acrylates, epoxides, epoxies, epoxy-amines, vinyl monomers, phenolic resins, and melamines.

The isolating material preferably comprises poly(acrylate), poly(sulfone), poly(ester), poly(vinyl alcohol), poly(acrylonitrile), or poly(amide),

Suitably, the isolating layer is applied on the surface of the device by means of a spraying process, an ink-jet printing process, a screen printing process. a spin-coating process, a dipcoating process, a laminating process or a stamping process. Suitably, the thickness of the isolating layer will be in the range of from 1 micron- 500 micron., preferably in the range of from 10 micron - 200 micron.

The device on the surface of which the conductive strain sensor is to be prepared can be any type of device on which such a sensor is commonly applied.

Suitably, devices include, but are not limited to crankshafts, steering shafts or rods, stabilizers, plate materials, aircraft wings, landing-gear, pipes or rolling bearings.

A method according to any one of claims 1-10, wherein after step (d) a third metal is applied on the second metal by means of an electro-deposition process

### Example

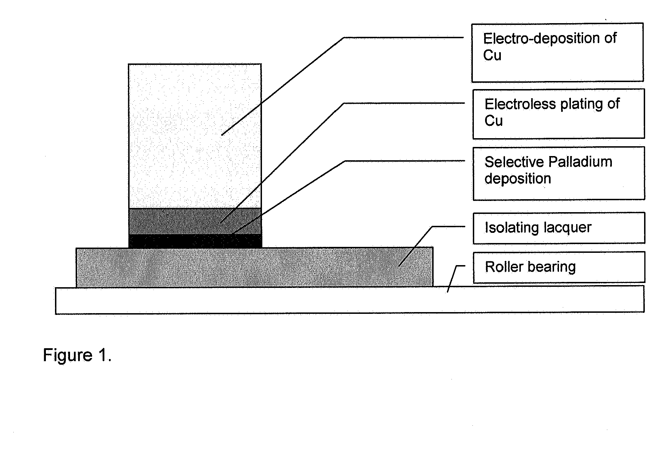

A roller bearing on which the stain sensor had to be applied was first cleaned. Since it was made from a electrically conducting material a first layer of electrically isolating material had to be applied. This has been done by means of spraying an isolating lacquer onto the surface of the bearing. Subsequently, a palladium seeded solution (Novigranth AK from Atotech) was selectively deposited on this isolating layer. The selective deposition was done by means of a pdms stamp. The obtained selectively seeded product was than submerged in a 50 g/l oxalicl acid solution for four minutes. Afterwards it was flushed and then submerged in an electroless plating bath filled with an Enplate MID Select 9070 solution (from Enthone) at 50 degrees centigrade during 15 minutes. This way an approximately 3 micron layer of cupper was deposited on the selectively deposited palladium pattern. The cupper layer was build up higher by means of applying more Cu on said layer utilizing an electro-deposition process. , wherein use was made of a 275 g/l cupper sulfate solution and a 60 g/l sulfuric acid solution. The acid cupper bath so obtained had a current density of approximately 4A/dm². The product thus obtained is schematically shown in Figure 1.

## Claims

1. A method for preparing a conductive strain sensor on the surface of a device to measure strain at the surface of the device, which method comprises the steps of:
(a) providing a device;
(b) applying an isolating layer on a surface of the device;
(c) establishing a distribution of particles of a first metal on the isolating layer obtained in step (b); and
(d) depositing a layer of a second metal on at least part of the distribution of the particles of the first metal as obtained in step (c).

2. A method according to claim 1, wherein the first metal is selected from the group consisting of cobalt, nickel, copper, rhodium, palladium, platinum, silver and gold.

3. A method according to claim 2, wherein the first metal is palladium.

4. A method according to any one of claims 1-3, wherein the second metal is selected from the group consisting of copper, nickel, nickel-phosphorous, nickel-boron, tin, silver, gold, and any alloy thereof.

5. A method according to claim 4, wherein the second metal is copper or a copper-nickel alloy.

6. A method according to any one of claims 1-5, wherein in step (c) the distribution of particles of the first metal is established by means of a microcontact process, spraying process, gravure printing process, flexo printing process, stamping process, pad printing process or inkjet printing method, using a solution that comprises the particles or ions of the first metal.

7. A method according to 6, wherein in step (c) the distribution of particles of the first metal is established by means of a stamp using a solution that comprises the particles of the first metal.

8. A method according to any one of claims 1-7, wherein in step (d) the layer of the second metal is deposited on the distribution of the particles of the first metal by means of an electroless plating process or electro-deposion process.

9. A method according to claim 8, wherein in step (d) the layer of the second metal is deposited on the distribution of the particles of the first metal by means of an electroless plating process.

10. A method according to claim 9, wherein in the electroless plating process use is made of a copper and/or nickel containing solution.

11. A method according to any one of claims 1-10, wherein after step (d) a third metal is applied on the layer of the second metal by means of an electro-deposition process.

12. A method according to claim 11, wherein the third metal is selected from the group consisting of copper, nickel, nickel-phosphorous, nickel-boron, tin, silver, gold, and any alloy thereof.

13. A method according to any one of claims 1-12, wherein the isolating layer comprises a material selected from the group consisting of poly(styrene), poly(butadiene), poly(propylene), poly(ethylene), poly(carbonate), poly(etherether ketone), poly(vinylchloride), poly(vinylidene chloride), poly(vinylidene fluoride), poly(tetrafluoroethylene), poly(acrylate), poly(phenylene sulfide), poly(sulfone), poly(ethersulfone), poly(ethyleneterephthalate), poly(ethylenenaphthalate), poly(butylterephthalate), poly(caprolactone), poly(ester), poly(vinyl alcohol), poly(vinyl ether), poly(siloxane), poly(acrylonitrile), poly(caprolactam), poly(amide), parylene, poly(naphthalene), poly(imides), acrylates, epoxides, epoxies, epoxy-amines, vinyl monomers, phenolic resins, and melamines.

14. A method according to any one of claims 1-13, wherein the isolating layer is applied on the surface of the device by means of a spraying process, an ink-jet printing process, a screen printing process, a spin-coating process, a dipcoating process, a laminating process or a stamping process.

15. A method according to any one of claims 1-12, wherein the device comprises a crankshaft, steering shaft or rod, stabilizer, plate material, aircraft wing, landing-gear, a pipe or a rolling bearing.
